# EUROPÄISCHE PATENTSCHRIFT

(11) **EP 2 390 622 B1**
(45) Veröffentlichungstag und Bekanntmachung des Hinweises auf die Patenterteilung: **24.10.2018**
(21) Anmeldenummer: 11155773.2
(22) Anmeldetag: 24.02.2011
(51) Int. Cl.: G01B 21/04, G05B 19/401

(54) **Messvorrichtung**
Measuring device
Dispositif de mesure

(30) Priorität: 28.05.2010 DE 102010029429
(43) Veröffentlichungstag der Anmeldung: 30.11.2011
(73) Patentinhaber: Dr. Johannes Heidenhain GmbH, 83301 Traunreut (DE)
(72) Erfinder: Geyermann, Dirk, 83377 Vachendorf (DE); Günther, Gero, 83376 Truchtlaching (DE); Oertli, Thomas, Dr., 82234 Weßling (DE)

(56) Entgegenhaltungen:
- EP-B1- 1 491 287
- EP-B1- 1 549 459
- WO-A1-2009/057229
- DE-U1- 29 916 325
- "TEST FIXTURE FOR MEASURING ROBOT REPEATABILITY/ACCURACY", IBM TECHNICAL DISCLOSURE BULLETIN, INTERNATIONAL BUSINESS MACHINES CORP. (THORNWOOD), US, Bd. 31, Nr. 6, 1. November 1988 (1988-11-01), Seiten 457-460, XP000050821, ISSN: 0018-8689

## Beschreibung

Die Erfindung betrifft eine Messvorrichtung zum Erfassen räumlicher Verlagerungen von Bewegungsachsen von Maschinen, wie Werkzeugmaschinen, Robotern oder Messmaschinen.

Die Messvorrichtung dient zum Messen von Lagefehlern von Linearachsen und Komponentenfehlern einer Linearachse bzw. Rundachse. Vermehrt kommen Fünfachsmaschinen für die Bearbeitung von Freiformflächen zum Einsatz. Dabei sind die Orientierung und Lage von Drehachsen zu den Linearachsen von besonderer Bedeutung für die Genauigkeit der Bearbeitung. Die Messvorrichtung kann auch hier verwendet werden, um die räumliche Genauigkeit überprüfen und beurteilen zu können und ggf. Kompensationsdaten zur Erhöhung der Genauigkeit davon abzuleiten.

Aus der DE 299 16 325 U1 ist eine derartige Messvorrichtung bekannt, bei der drei Längenmesstaster zur Anlage an einer Messkugel in Richtung zum Mittelpunkt der Messkugel hin orientiert angeordnet sind. Die Längenmesstaster sind insbesondere in einem spitzen Winkel zueinander angeordnet, um eine große Manövrierfähigkeit zu erreichen und somit einen flexiblen Einsatz zu gewährleisten. Die Längenmesstaster sind an plattenförmigen Abschnitten angeordnet, deren Ebenen jeweils lotrecht zu der Messrichtung des betreffenden Längenmesstasters verläuft.

Bei der Messvorrichtung gemäß der Literaturstelle "TEST FIXTURE FOR MEASURING ROBOT REPEATABILITY / ACCURACY", IBM Technical Disclosure Bulletin 31 (1988) Nov., No. 6, Seiten 457-460 und der WO 2009/057229 A1 sind die Längenmesstaster an drei plattenförmigen Abschnitten angeordnet, deren Ebenen jeweils senkrecht zueinander verlaufen.

Bei der Messvorrichtung gemäß der EP 1 491 287 B1 sind die Längenmesstaster an einem kegelstumpfförmigen Halter angeordnet, wodurch eine möglichst hohe Steifigkeit der Messvorrichtung erreicht werden soll.

In der EP 1 549 459 B1 wird darauf hingewiesen, dass es vorteilhaft sein kann, wenn der Halter mit den Längenmesstastern schwenkbar ist. Hierzu ist der Halter mit einem stangenförmigen Gebilde verbunden, an dem ein Gelenk angeordnet ist, um das der Halter verschwenkbar gelagert ist.

Der Erfindung liegt die Aufgabe zugrunde, eine Messvorrichtung der eingangs genannten Art zu schaffen, die eine hohe Messgenauigkeit aufweist und die leicht fertigbar ist

Diese Aufgabe wird durch die Messvorrichtung mit den Merkmalen des Patentanspruchs 1 gelöst.

Demnach umfasst die Messvorrichtung einen Halter, an dem mehrere Längenmesssysteme angeordnet sind, zum Messen eines Abstandes zu einem gemeinsamen Messkörper in unterschiedlichen Raumrichtungen. Der Halter weist eine kugelförmige Form auf, die eine Kugelzone bildet, wobei die mehreren Längenmesssysteme zum Messen in Richtung des Mittelpunktes der kugelförmigen Form des Halters ausgerichtet sind und im Bereich der Kugelzone am Halter angeordnet sind.

Weiterhin soll eine Messvorrichtung der eingangs genannten Art geschaffen werden, die darüber hinaus flexibel einsetzbar ist.

Die Aufgabe wird ebenfalls durch die Merkmale des Patentanspruchs 1 gelöst.

Demnach umfasst die Messvorrichtung einen Halter, an dem mehrere Längenmesssysteme angeordnet sind, zum Messen eines Abstandes zu einem Messkörper in unterschiedlichen Raumrichtungen. Der Halter weist eine kugelförmige Form auf, die eine Kugelkalotte bildet, mit der er in einem Gegenlager um den Mittelpunkt der kugeligen Form verschwenkbar ist, wobei die mehreren Längenmesssysteme zum Messen in Richtung des Mittelpunktes der kugelförmigen Form des Halters ausgerichtet sind.

Weitere vorteilhafte Ausgestaltungen der Erfindung sind den abhängigen Ansprüchen zu entnehmen.

Zur besonders einfachen Fertigung des Halters ist es vorteilhaft, wenn die Kugelzone zur Aufnahme der Längenmesssysteme und die Kugelkalotte zum Schwenken des Halters kontinuierlich ineinander übergehen, also ein gemeinsames Kugelsegment bilden.

Zur präzisen Messung und nachfolgender Berechnung der räumlichen Verlagerung des Messkörpers sind am Halter vorzugsweise drei Längenmesssysteme angeordnet.

Die Längenmesssysteme sind bevorzugt Längenmesstaster, mit jeweils einem am Halter stationär angeordneten Grundkörper, in dem zum berührend antastenden Messen des Abstandes zu dem Messkörper ein Taststift längsbeweglich gelagert ist. Dabei ist der Taststift in vorteilhafter Weise über Federn in Richtung des Mittelpunktes der kugelförmigen Form des Halters vorgespannt.

Die Kugelzone hat den Vorteil, dass die Lage zumindest eines der Längenmesssysteme durch Verschieben an der Kugelzone des Halters einstellbar ist, wobei die Orientierung des Längenmesssystems zum Mittelpunkt der kugelförmigen Form hin beibehalten wird. Hierzu kann der Halter derart ausgebildet sein, dass die Verschiebung nur in einer vorgegebenen Richtung ermöglicht wird oder in mehreren Richtungen.

Weitere vorteilhafte Merkmale und Vorteile der Erfindung werden in der nachfolgenden Beschreibung dreier Ausführungsbeispiele anhand der Figuren aufgezeigt.

Es zeigen:
- Figur 1: eine perspektivische Ansicht einer ersten Messvorrichtung,
- Figur 2: den Halter der ersten Messvorrichtung,
- Figur3: eine perspektivische Ansicht einer zweiten Messvorrichtung,
- Figur 4: die perspektivische Ansicht der zweiten Messvorrichtung im Teilschnitt,
- Figur 5: eine perspektivische Ansicht einer dritten Messvorrichtung, und
- Figur 6: die perspektivische Ansicht der dritten Messvorrichtung im Schnitt.

Bei den nachfolgenden Ausführungsbeispielen sind die Messvorrichtung an einem Maschinentisch 6 einer Maschine und ein Messkörper in Form einer Messkugel 5 an einer Werkzeugaufnahme dieser Maschine angeordnet.

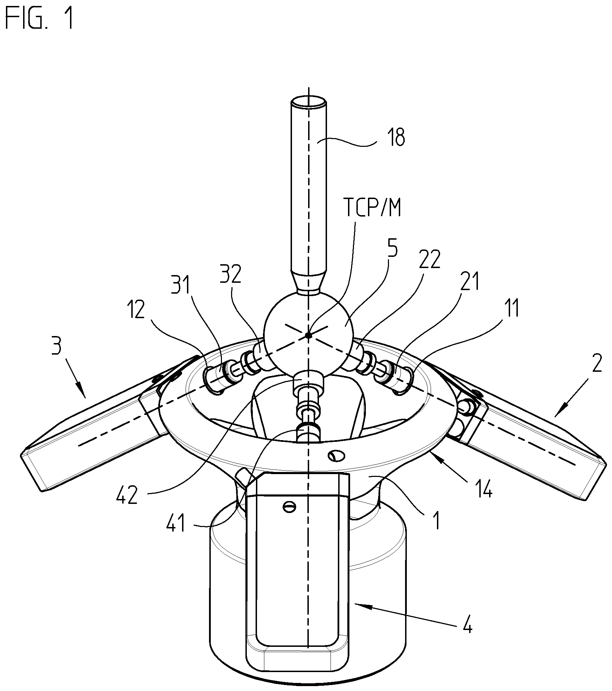

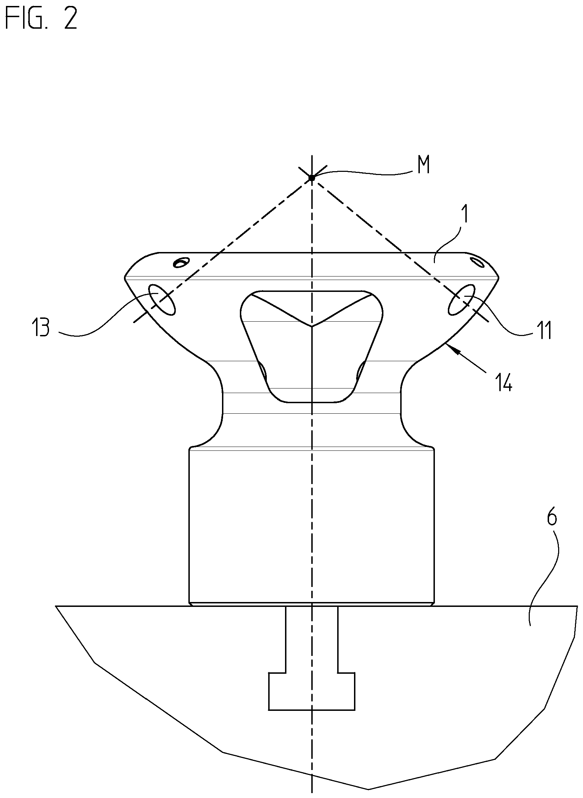

Anhand der Figuren 1 und 2 wird ein erstes Ausführungsbeispiel der Erfindung näher erläutert. Die Messvorrichtung dient zum Erfassen räumlicher Verlagerungen von Bewegungsachsen einer zu prüfenden Maschine. Durch mehrere Längen- bzw. Abstandsmessungen wird die räumliche Verlagerung eines tool center points (TCP) ermittelt. Die Messvorrichtung umfasst hierzu einen Halter 1, an dem mehrere Längenmesssysteme 2, 3, 4 angeordnet sind. Die räumliche Anordnung der Längenmesssysteme 2, 3, 4 am Halter 1 ist zum Messen eines Abstandes zu einem Messkörper 5 in unterschiedlichen Raumrichtungen ausgelegt. Die Längenmesssysteme sind Längenmesstaster 2, 3, 4, die zu einem gemeinsamen Schnittpunkt M orientiert angeordnet sind, das heißt, dass sich die Messrichtungen der Längenmesstaster 2, 3, 4 in einem gemeinsamen Punkt M schneiden.

Bei der Messung tasten die Längenmesstaster 2, 3, 4 die Oberfläche des in einer Werkzeugaufnahme eingespannten Messkörpers - insbesondere in Form einer Messkugel 5 - an, so dass die räumliche Verlagerung der Messkugel 5 und somit des TCP durch mehrere Längenmessungen erfasst wird. Der tool center point (TCP) wird vorzugsweise vom Mittelpunkt der Messkugel 5 verkörpert, wobei dieser Mittelpunkt TCP in vorteilhafter Weise wiederum der gemeinsame Schnittpunkt M der Messrichtungen der Längenmesstaster 2, 3, 4 ist.

Soll die relative Verlagerung zweier zueinander beweglicher Maschinenteile gemessen werden, so wird die Messkugel 5 an einem der Maschinenteile und die Messvorrichtung am anderen der beiden Maschinenteile befestigt. Ist die zu prüfende Maschine eine Werkzeugmaschine, ist die Messkugel 5 über einen Einspannschaft 18 an der Werkzeugaufnahme und die Messvorrichtung an dem Maschinentisch 6 festlegbar, insbesondere klemmbar. In Figur 2 ist der Halter 1 an dem Maschinentisch 6 angebracht dargestellt.

Zur Erfassung und somit Überprüfung der geometrischen Genauigkeit von Achsbewegungen einer Maschine werden beispielsweise Dreh- und Schwenkbewegungen mit den Bewegungsachsen der Maschine ausgeführt. Aus den gemessenen Verlagerungen des TCP relativ zum Halter 1 mittels der drei Längenmesstaster 2, 3, 4 können Rückschlüsse auf die geometrischen, kinematischen, statischen, thermischen und dynamischen Eigenschaften der zu prüfenden Maschine gewonnen werden. Mit der Messvorrichtung können statische und dynamische Bahnabweichungen einer einzigen Bewegungsachse der Maschine oder auch mehrerer Bewegungsachsen der Maschine simultan erfasst werden. Aus den gewonnenen Messwerten der Längenmesstaster 2, 3, 4 können auch Kompensationsdaten abgeleitet werden, um die Genauigkeit der Maschine zu erhöhen. Dazu können die gemessenen Positionsmesswerte in das Koordinatensystem der Maschine umgesetzt werden.

Vorzugsweise werden drei Längenmesstaster 2, 3, 4 verwendet, die beispielsweise senkrecht zueinander ausgerichtet sind.

Die Längenmesstaster 2, 3, 4 bestehen jeweils aus einem Grundkörper 21, 31, 41, in dem zum berührend antastenden Messen des Abstandes zu der Messkugel 5, ein Taststift 22, 32, 42 längsbeweglich gelagert ist. Der Taststift 22, 32, 42 tastet die Oberfläche der Messkugel 5 an und ermittelt so den Abstand zur Oberfläche der Messkugel 5. Dadurch wird die Relativverlagerung der Oberfläche der Messkugel 5 gegenüber dem Halter 1 ermittelt, was der Relativverlagerung des TCP gegenüber dem Mittelpunkt M entspricht.

Um bei der Messung die Spitze des Taststiftes 22, 32, 42 ständig in Kontakt mit der Oberfläche der Messkugel 5 zu halten, ist der Taststift 22, 32, 42 in Richtung der Messkugel 5 vorgespannt am Grundkörper 21, 31, 41 gelagert, beispielsweise über Federmittel oder pneumatisch. Die Spitze des Taststiftes 22, 32, 42 zum kontaktieren der Messkugel 5 ist kugelförmig oder als ebene Fläche ausgebildet. Alternativ kann der Kontakt mit der Messkugel 5 dadurch gewährleistet werden, dass die Taststifte 22, 32 42 an der Messkugel 5 spielfrei angelenkt bzw. gelagert sind, beispielsweise über Magnetlager oder Luftlager.

Die Längenmesstaster 2, 3, 4 sind hochgenau messende Positionsmesssysteme, weshalb besonders Längenmesstaster mit einer lichtelektrisch abtastbaren Messteilung geeignet sind. Dabei kann die Messteilung eine inkrementale und / oder eine absolute Messteilung verkörpern.

Der Grundkörper 21, 31, 41 der Längenmesstaster 2, 3, 4 ist jeweils am Halter 1 der Messvorrichtung fixiert. Hierzu ist am Halter 1 für jeden Grundkörper 21, 31, 41 eine in Richtung zum Punkt M weisende Ausnehmung 11, 12, 13 vorgesehen. Der Grundkörper 21, 31, 41 kann von einer Seite aus in diese Ausnehmung 11, 12, 13 des Halters 1 hindurch gesteckt sein und auf der anderen Seite des Halters 1 gekontert sein. Alternativ kann der Grundkörper 21, 31, 41 auch in die Ausnehmung 11, 12, 13 eingeschraubt sein. In den dargestellten Ausführungsbeispielen ist der Grundkörper 21, 31, 41 in der jeweils korrespondierenden Ausnehmung 11, 12, 13 radial geklemmt.

Der Halter 1 weist eine kugelförmige Form auf, und die mehreren Längenmesstaster 2, 3, 4 sind zum Messen in Richtung des Mittelpunktes M der kugelförmigen Form des Halters 1 ausgerichtet angeordnet. Die kugelige Form des Halters 1 bildet eine Kugelzone 14, in dessen Bereich die Längenmesstaster 2, 3, 4 am Halter 1 angeordnet sind. Die kugelige Form des Halters 1 bildet also in einem Bereich eine Kugelschicht, wobei die kugelförmig gekrümmte Oberfläche dieser Kugelschicht die Kugelzone 14 ausbildet.

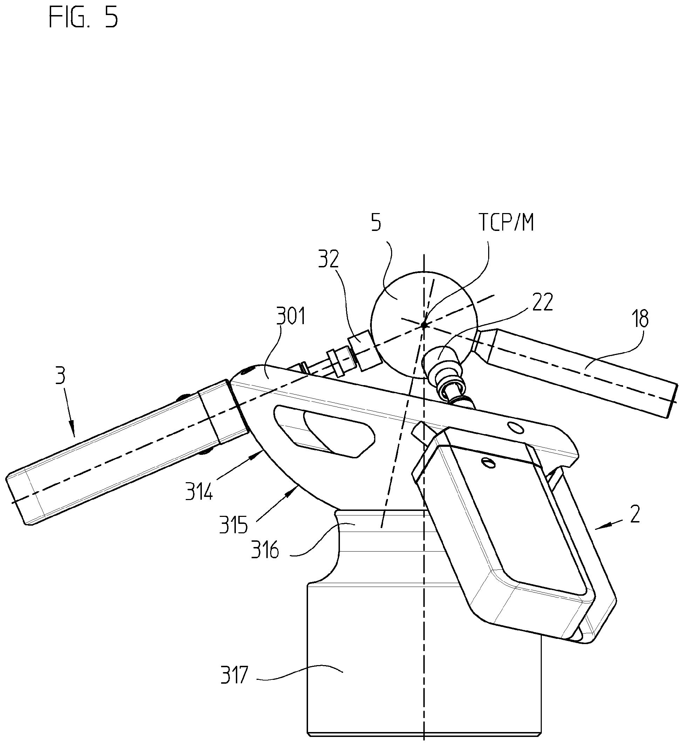

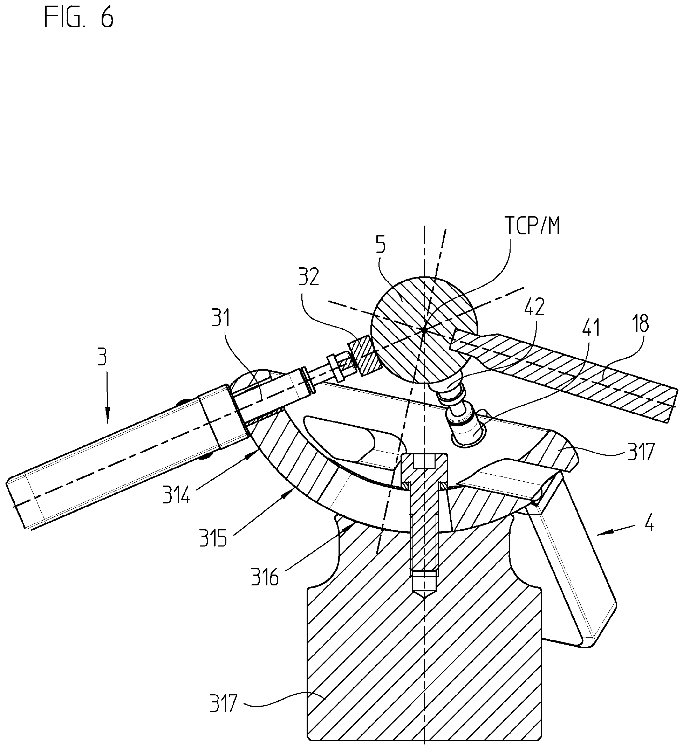

Die kugelförmige Form verleiht dem Halter 1 eine besonders hohe Steifigkeit- in allen Raumrichtungen, so dass die einmal daran fixierten Längenmesstaster 2, 3, 4 ihre Lage in allen Raumrichtungen besonders langzeitstabil beibehalten. Mit geringem Eigengewicht des Halters 1 kann maximale Steifigkeit in allen Raumrichtungen erreicht werden. Weiterhin ist ein kugelförmiger Halter 1 als rotationssymmetrisches Teil durch Drehbearbeitung besonders leicht und präzise fertigbar. Der Mittelpunkt M kann durch Antasten der Kugeloberfläche, also der Kugelzone 14 und / oder der später noch anhand der Figuren 5 und 6 näher beschriebenen Kugelkalotte 315 ermittelt werden.

Wie in den Figuren 1 und 2 ersichtlich ist, sind die Ausnehmungen 11, 12, 13 im Halter 1 zur Aufnahme der Längenmesstaster 2, 3, 4 zylindrisch. Befinden sich nun diese zylindrischen Ausnehmungen 11, 12, 13 innerhalb der Kugelzone 14, so bildet sich jeweils im Bereich der Ausnehmung 11, 12, 13 an dem Halter 1 durch Verschneiden der Kugel- und Zylindergeometrie eine Kante aus, die eine kreisrunde in einer Ebene liegende Auflage für den Grundkörper 21, 31, 41 des jeweiligen Längenmesstasters 2, 3, 4 darstellt. Die Längenmesstaster 2, 3, 4 sind somit besonders stabil am Halter 1 fixierbar bzw. positionierbar, wobei durch die kreisrunde Auflage eine definierte Auflage und Orientierung der Längenmesstaster 2, 3, 4 in Richtung des Mittelpunktes M der kugeligen Form, hier gleichzeitig der TCP, vorgegeben ist.

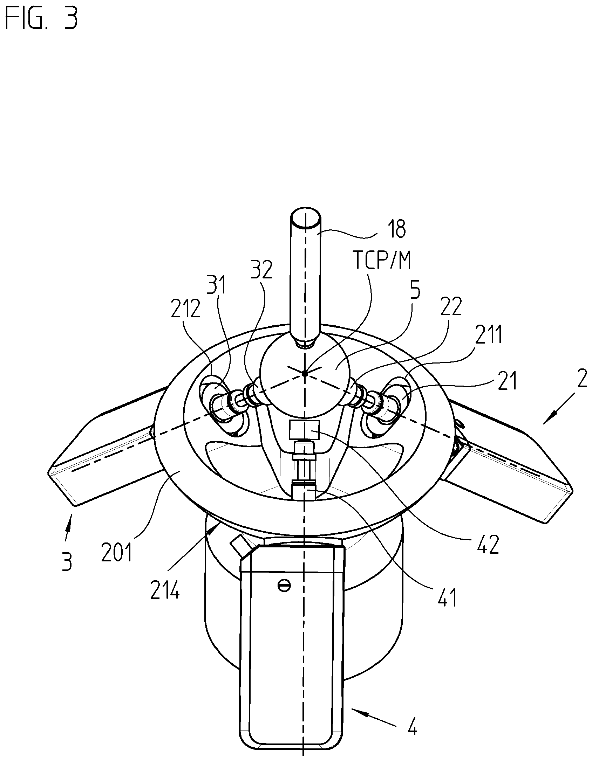

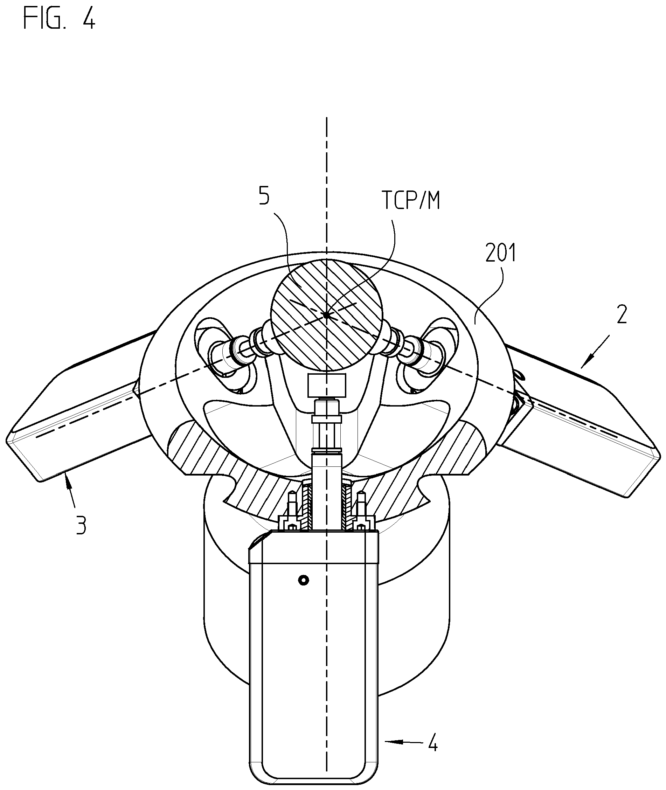

Die Figuren 3 und 4 zeigen ein weiteres Ausführungsbeispiel. Dabei wird ein Halter 201 verwendet, welcher die gleiche kugelige Form des ersten Ausführungsbeispiels aufweist, also eine Kugelzone 214 aufweist. Im Unterschied zu dem ersten Ausführungsbeispiel wird die kugelförmige Form des Halters 201 vorteilhaft genutzt, indem die Lage zumindest eines der Längenmesstaster 2, 3, 4 durch Verschieben an der Kugelzone 214 des Halters 201 einstellbar ist, wobei die Orientierung des Längenmesstasters 2, 3, 4 zum Mittelpunkt M der kugelförmigen Form hin und somit zum gemeinsamen Schnittpunkt der Messrichtungen der Längenmesstaster 2, 3, 4 beibehalten wird. In diesem Fall ist zumindest eine Ausnehmung 211, 212, 213 im Halter 201 ein Langloch, in dem der Grundkörper 21, 31, 41 des Längenmesstasters 2, 3, 4 in eine Richtung justierbar geführt ist. Nach erfolgter Justierung wird der Grundkörper 21, 31, 41 am Halter 201 festgelegt, beispielsweise festgeschraubt.

Die Ausnehmung im Halter 201 kann auch derart geformt sein, dass eine Justierung in mehreren Richtungen ermöglicht wird.

Ein weiteres Ausführungsbeispiel der Erfindung ist in den Figuren 5 und 6 dargestellt. Gemäß dieses weiteren Ausführungsbeispiels bildet die kugelige Form eines Halters 301 eine Kugelkalotte 315 aus. Die Kugelkalotte 315 kann als Oberfläche eines Kugelabschnitts betrachtet werden. Der Halter 301 ist über diese Kugelkalotte 315 in einem Gegenlager 316 einer Basis 317 verschwenkbar gelagert, wobei der Schwenkmittelpunkt der Schnittpunkt M der Messrichtungen der mehreren Längenmesstaster 2, 3, 4 ist, der hier auch mit dem TCP, also dem Mittelpunkt der Messkugel 5 zusammenfällt. Durch diese Maßnahme wird die Möglichkeit geschaffen, Schwenkachsen kollisionsfrei in einem großen Schwenkbereich zu überprüfen. Dazu wird der Halter 301 im Gegenlager 316 in die erforderlichen Schwenkpositionen gebracht, um die Messkugel 5 und den Einspannschaft 18 in diesen verschiedenen Schwenkpositionen kollisionsfrei an die Längenmesstaster 2, 3, 4 heranführen zu können. Wesentlich dabei ist, dass in diesen verschiedenen Schwenkpositionen des Halters 301 die Position des Mittelpunktes M erhalten bleibt, sich also nicht verlagert.

Bei diesem Ausführungsbeispiel gehen die Kugelzone 314 und die Kugelkalotte 315 kontinuierlich ineinander über, bilden also ein gemeinsames Kugelsegment.

Das Gegenlager 316 der Basis 317 ist vorzugsweise als Kugelschale ausgeführt, wie in der Schnittdarstellung Figur 6 dargestellt ist. Nach erfolgter Einstellung der gewünschten Schwenklage des Halters 301 wird dieser an der Basis 317 ortsfest arretiert, beispielsweise durch Schrauben. Ist das Gegenlager 316 als Kugelschale ausgeführt, weist es den gleichen Radius auf wie Kugelkalotte 315. Das Gegenlager kann alternativ als Kreisringauflage oder Mehrpunktauflage, insbesondere Dreipunktauflage, ausgeführt sein.

In nicht gezeigter Weise können Messmittel zur Messung des Schwenkwinkels des Halters 301 gegenüber der Basis 317 vorgesehen sein.

Die Messkugel 5 als Messkörper ist besonders vorteilhaft, da bei der Antastung von verschiedenen Richtungen der gleiche Abstand bis zum TCP vorliegt. Die Erfindung ist aber nicht auf die Messkugel 5 als Messkörper beschränkt.

Vorteilhaft ist es, wenn die Positionsmesswerte der mehreren Längenmesssysteme einer numerischen Steuerung zugeführt werden, welche die Bewegungsbefehle der Bewegungsachsen der zu prüfenden Maschine vorgibt. Die Positionsmesswerte dienen zur Bildung von Parametern eines Modells der zu prüfenden Maschine. Dabei ist es vorteilhaft, wenn die Positionsmesswerte der Längenmesssysteme in das Koordinatensystem der zu prüfenden Maschine umgerechnet werden.

In nicht gezeigter Weise kann die Messvorrichtung an der Werkzeugaufnahme und der Messkörper am Maschinentisch angeordnet werden. Dabei wird wiederum die Relativverlagerung des Messkörpers gegenüber dem Mittelpunkt M der Messvorrichtung ermittelt, wobei in diesem Fall der Mittelpunkt M vorzugsweise mit dem TCP zusammenfällt.

Der Anwender wird die geeignete Anordnung von Messvorrichtung und Messkörper in Abhängigkeit des Aufbaus der zu prüfenden Maschine wählen.

## Patentansprüche

1. Messvorrichtung zum Erfassen räumlicher Verlagerungen von Bewegungsachsen, umfassend einen Halter (1, 201, 301), an dem mehrere Längenmesssysteme (2, 3, 4) angeordnet sind, zum Messen eines Abstandes zu einem Messkörper (5) in unterschiedlichen Raumrichtungen,
wobei die Längenmesssysteme (2, 3, 4) Längenmesstaster sind,
**dadurch gekennzeichnet, dass** der Halter (1, 201, 301) eine kugelförmige Form aufweist, und dass die mehreren Längenmesssysteme (2, 3, 4) zum Messen in Richtung des Mittelpunktes (M) der kugelförmigen Form des Halters (1, 201, 301) ausgerichtet sind, wobei
• die kugelförmige Form des Halters (1, 201, 301) eine Kugelzone (14, 214, 314) bildet und die mehreren Längenmesssysteme (2, 3, 4) im Bereich der Kugelzone (14, 214, 314) am Halter (1, 201, 301) angeordnet sind, und / oder
• die kugelförmige Form des Halters (1, 201, 301) eine Kugelkalotte (315) bildet, mit der er in einem Gegenlager (316) um den Mittelpunkt (M) der kugeligen Form verschwenkbar ist.

2. Messvorrichtung nach Anspruch 1, **dadurch gekennzeichnet, dass** die Kugelzone (14, 214, 314) und die Kugelkalotte (315) ein gemeinsames Kugelsegment bilden.

3. Messvorrichtung nach einem der vorhergehenden Ansprüche, **dadurch gekennzeichnet, dass** am Halter (1, 201, 301) mindestens drei Längenmesssysteme (2, 3, 4) angeordnet sind.

4. Messvorrichtung nach einem der vorhergehenden Ansprüche, **dadurch gekennzeichnet, dass** die Längenmesssysteme Längenmesstaster (2, 3, 4) sind, mit jeweils einem am Halter (1, 201, 301) stationär angeordneten Grundkörpern (21, 31, 41), in dem zum berührend antastenden Messen des Abstandes zu dem Messkörper (5) ein Taststift (22, 32, 42) längsbeweglich gelagert ist.

5. Messvorrichtung nach Anspruch 4, **dadurch gekennzeichnet, dass** die Taststifte (22, 32, 42) über Federn in Richtung des Mittelpunktes (M) der kugelförmigen Form des Halters (1, 201, 301) vorgespannt sind.

6. Messvorrichtung nach einem der vorhergehenden Ansprüche, **dadurch gekennzeichnet, dass** die Lage zumindest eines der Längenmesssysteme (2, 3, 4) durch Verschieben an der Kugelzone (14, 214, 314) des Halters (1, 201, 301) einstellbar ist, wobei die Orientierung des Längenmesssystems (2, 3, 4) zum Mittelpunkt (M) der kugelförmigen Form hin beibehalten wird.

## Claims

1. Measuring device for detecting spatial displacements of movement axes, comprising a holder (1, 201, 301), on which multiple length measuring systems (2, 3, 4) are arranged for measuring a distance to a measuring body (5) in different spatial directions, the length measuring systems (2, 3 4) being length measuring probes,
**characterized in that** the holder (1, 201, 301) has a spherical shape and **in that** the multiple length measuring systems (2, 3, 4) are aligned to measure in the direction of the midpoint (M) of the spherical shape of the holder (1, 201, 301, wherein
• the spherical shape of the holder (1, 201, 301) forms a spherical zone (14, 214, 314), and the multiple length measuring systems (2, 3, 4) are arranged on the holder (1, 201, 301) in the region of the spherical zone (14, 214, 314), and/or
• the spherical shape of the holder (1, 201, 301) forms a spherical cap (315), with which it can be pivoted about the midpoint (M) of the spherical shape in a mating bearing (316).

2. Measuring device according to Claim 1, **characterized in that** the spherical zone (14, 214, 314) and the spherical cap (315) form a common spherical segment.

3. Measuring device according to one of the preceding claims, **characterized in that** at least three length measuring systems (2, 3, 4) are arranged on the holder (1, 201, 301).

4. Measuring device according to one of the preceding claims, **characterized in that** the length measuring systems are length measuring probes (2, 3, 4), each having base bodies (21, 31, 41) arranged in a stationary manner on the holder (1, 201, 301), in which a probe pin (22, 32, 42) is mounted such that it can be moved longitudinally for measuring the distance to the measuring body (5) with contact.

5. Measuring device according to Claim 4, **characterized in that** the probe pins (22, 32, 42) are preloaded via springs in the direction of the mid-point (M) of the spherical shape of the holder (1, 201, 301).

6. Measuring device according to one of the preceding claims, **characterized in that** the position of at least one of the length measuring systems (2, 3, 4) can be adjusted by displacement of the spherical zone (14, 214, 314) of the holder (1, 201, 301), the orientation of the length measuring system (2, 3, 4) towards the midpoint (M) of the spherical shape being maintained.

## Revendications

1. Dispositif de mesure servant à saisir des déplacements spatiaux d'axes de déplacement, et comprenant un support (1, 201, 301) sur lequel sont disposés plusieurs systèmes (2, 3, 4) de mesure de longueur pour mesurer la distance entre un corps (5) à mesurer dans différentes directions spatiales,
les systèmes (2, 3, 4) de mesure de longueur étant des palpeurs de mesure de longueur,
**caractérisé en ce que**
le support (1, 201, 301) présente une forme sphérique, et
**en ce que** pour la mesure, les différents systèmes (2, 3, 4) de mesure de longueur sont alignés en direction du centre (M) de la forme sphérique du support (1, 201, 301),
• la forme sphérique du support (1, 201, 301) formant une zone sphérique (14, 214, 314) et les différents systèmes (2, 3, 4) de mesure de longueur étant disposés au niveau de la zone sphérique (14, 214, 314) sur le support (1, 201, 301) et/ou
• la forme sphérique du support (1, 201, 301) formant une calotte sphérique (315) par laquelle le support peut pivoter autour du centre (M) de la forme sphérique dans un contre-palier (316).

2. Dispositif de mesure selon la revendication 1, **caractérisé en ce que** la zone sphérique (14, 214, 314) et la calotte sphérique (315) forment ensemble un segment de sphère.

3. Dispositif de mesure selon l'une des revendications précédentes, **caractérisé en ce qu'**au moins trois systèmes (2, 3, 4) de mesure de longueur sont disposés sur le support (1, 201, 301).

4. Dispositif de mesure selon l'une des revendications précédentes, **caractérisé en ce que** les systèmes de mesure de longueur sont des palpeurs (2, 3, 4) de mesure de longueur présentant chacun un corps de base (21, 31, 41) disposé en position stationnaire sur le support (1, 201, 301) et dans lequel une tige de palpage (22, 32, 42) est montée à déplacement longitudinal pour mesurer par palpage de contact la distance au corps (5) à mesurer.

5. Dispositif de mesure selon la revendication 4, **caractérisé en ce que** les tiges de palpage (22, 32, 42) sont précontraintes en direction du centre (M) de la forme sphérique du support (1, 201, 301) par des ressorts.

6. Dispositif de mesure selon l'une des revendications précédentes, **caractérisé en ce que** la position d'au moins l'un des systèmes (2, 3, 4) de mesure de longueur peut être ajustée par déplacement sur la zone sphérique (14, 214, 314) du support (1, 201, 301), l'orientation du système (2, 3, 4) de mesure de longueur par rapport au. centre (M) de la forme sphérique étant maintenue.
